# EUROPÄISCHE PATENTANMELDUNG

(11) **EP 1 731 289 A1**
(43) Veröffentlichungstag der Anmeldung: **13.12.2006**
(21) Anmeldenummer: 06003002.0
(22) Anmeldetag: 15.02.2006
(51) Int. Cl.: B29C 45/67, B29C 45/17

(54) **Spritzgiessmaschine**

(30) Priorität: 10.06.2005 DE 102005026850
(71) Anmelder: Klöckner Desma Elastomertechnik GmbH, 78567 Fridingen (DE)
(72) Erfinder: Volker Krell, D-78579 Neuhausen (DE)
(74) Vertreter: Röther, Peter

(57) **Zusammenfassung**

Die Erfindung betrifft eine Spritzgießmaschine (1) mit einer feststehenden Werkzeugaufspannplatte (3) und einer relativ zu dieser verfahrbaren Werkzeugaufspannplatte (5), wobei die verfahrbare Aufspannplatte an Holmen (Plungern) (4) geführt mittels eines Verfahrantriebs bewegbar ist und die auf die Aufspannplatten aufgespannten Werkzeughälften (19,20) ausserhalb des durch die Holme/Plunger (4) eingefassen Raumes angeordnet sind, die dadurch gekennzeichnet ist, dass eine der Werkzeugaufspannplatten miteinander in Verbindung stehende und ein in sich geschlossenes, mit einem Druckmittel gefülltes und mit Druck beaufschlagbares System bildende Aufnahmeräume (7,8) für die einfahrenden Holmenden (14) aufweist, wobei der/die werkzeugseitige(n) Holm(e) (4) auf seiner/ihrer in den jeweiligen Aufnahmeraum (8) weisenden Stirnseite (14) jeweils einen im Durchmesser größeren, kolbenartigen Aufsatz (13) trägt/tragen, der den Aufnahmeraum vollständig durchsetzt und abgedichtet aus diesem hinausragt.

## Beschreibung

Die Erfindung betrifft eine Spritzgießmaschine mit einer feststehenden Werkzeugaufspannplatte und einer relativ zu dieser verfahrbaren Werkzeugaufspannplatte, wobei die verfahrbare Aufspannplatte an Holmen geführt mittels eines Verfahrantriebs relativ zur feststehenden Aufspannplatte bewegbar ist.

Derartige Maschinen dienen zur Herstellung von Spritzgußteilen aus Kunststoffen und/oder Elastomeren.

Die Werkzeugaufspannplatten sind bei Vertikalmaschinen übereinander und bei Horizontalmaschinen nebeneinander angeordnet.

In der Regel befinden sich die beiden Werkzeughälften auf den Werkzeugaufspannplatten innerhalb des durch die Holme abgegrenzten Raumes.

Nach dem durch den Verfahrantrieb bewerkstelligten Zufahren der Werkzeugteile muss eine starke Werkzeugzuhaltekraft aufgebracht werden, damit beim Spritzvorgang kein Material aus den Werkzeughälften austreten kann. Die hierbei auftretenden Kräfte verformen die Werkzeugaufspannplatten, wodurch die Parallelität der beiden Werkzeughälften zueinander und damit der Werkzeughälften in Mitleidenschaft gezogen wird.

Bei den eben zitierten Geometrien ist dies durch die Symmetrie der Krafteinleitung nicht so gravierend.

Bei der erfindungsgemäßen Spritzgießmaschine sind die Werkzeughälften jedoch nicht innerhalb der durch die Holme aufgespannten Fläche angeordnet, sondern ausserhalb, so dass die die Maschine bedienende Person bequemer an das Formwerkzeug herankommt und dieses nach dem Spritzvorgang auf einfache Weise entleeren kann.

Das Aufbringen der Schließkraft auf die Werkzeughälften führt bei dieser Art der Maschine zu einer erheblichen Asymmetrie der Kräfte, was zu unerwünschten Momenten innerhalb des durch die Formaufspannplatten und die Holme gebildeten Systems führt, so dass es zu Durchbiegungen der Platten, der Holme und natürlich zu Unparallelität innerhalb des Werkzeugs kommt.

Der Erfindung liegt daher die Aufgabe zugrunde, beim Schließvorgang und bei der Aufbringung der Schließkraft die unerwünschten Drehmomente und Kräfte so auszugleichen, dass eine exakte Parallelität der Formaufspannplatten und damit der Werkzeughälften erreicht wird.

Die Erfindung löst diese Aufgabe gemäß dem kennzeichnenden Teil des Anspruchs 1 dadurch, dass eine der Formaufspannplatten miteinander in Verbindung stehende und ein in sich geschlossenes mit einem Druckmittel gefülltes und mit Druck beaufschlagbares System bildende Aufnahmeräume für die einfahrenden Holmenden aufweist, wobei der/die werkzeugseitige(n) Holm(e) auf seiner/ihrer in den jeweiligen Aufnahmeraum weisenden Stirnseite(n) jeweils einen im Durchmesser größeren kolbenartigen Aufsatz trägt/tragen, der den Aufnahmeraum vollständig durchsetzt und aus diesem abgedichtet hinausragt.

Im geöffneten Zustand schließen die Stirnflächen der Holme mit der Unterseite der Aufnahmeräume ab, wobei der/die kolbenartige(n) Aufsatz/Aufsätze auf der Unterseite des/der Aufnahmeraums/Aufnahmeräume aufsitzt/aufsitzen, den gesamten Aufnahmeraum durchsetzt/durchsetzen und am anderen Ende des Aufnahmeraums abgedichtet aus diesem vorsteht/vorstehen.

Das durch die Aufnahmeräume gebildete System ist mit einem Druckmittel gefüllt.

Wird die verfahrbare Formaufspannplatte nun mittels des Verfahrantriebs auf die feststehende Aufspannplatte zu bewegt, dringen die Holme in den jeweiligen Aufnahmeraum ein. Dabei verdrängen der mindestens eine werkzeugabseitige Holm Druckmittel aus dem ihm zugeordneten Aufnahmeraum, welches praktisch drucklos über die Verbindung in den werkzeugseitigen Aufnahmeraum strömt.

Sobald die Werkzeughälften miteinander in Berührung sind, wird das System mit Druck beaufschlagt, wobei das Druckmittel auf den mindestens einen werkzeugabseitigen, einen Kolben bildenden Plunger eine Druckkraft ausübt, während durch die Druckbeaufschlagung des kolbenartigen Aufsatzes auf den diesem zugeordneten Holm eine Zugkraft ausgeübt wird, wodurch die Kräfte und Drehmomente sich aufheben und eine gute Parallelität der Werkzeugaufspannplatten bzw. der Werkzeughälften gewährleistet ist.

Durch den größeren Druchmesser des kolbenartigen Aufsatzes sind die ihnen zugeordneten Aufnahmeräume volumenmäßig größer ausgestaltet als die beiden anderen Aufnahmeräume, in die die ohne Aufsatz ausgebildeten Holme einfahren.

Da beim Schließvorgang auf der Seite des volumenmäßig größeren Aufnahmeraumes mehr Öl gebraucht wird als in dem anderen Aufnahmeraum verdrängt wird, ist gemäß Anspruch 3 vorgeschlagen, dass das geschlossene System über ein Ventil mit einem Druckmittelreservoir verbunden ist, aus dem durch das Nachsaugeventil Druckmittel nachströmen kann. Dieses Druckmittel wird beim Öffnen des Werkzeugs über das Ventil wieder in das Reservoir zurückgeführt.

Der Anspruch 4 schlägt vor, dass zumindest in einem der kolbenartigen Aufsätze als Verfahrantrieb ein Druckmittelzylinder angeordnet ist, dessen Kolbenstange aus dem Aufsatz hinausragt und an einem an der Aufspannplatte befestigten, das Aufsatzende portalartig überbrückenden Joch angreift.

Da dieser Druckmittelzylinder lediglich für die Bewegung der Formaufspannplatte mit der daran befestigten Werkzeughälfte verantwortlich ist, kann dieser recht klein dimensioniert sein.

Somit ist erfindungsgemäß Werkzeugaufspannplatte, Druckräume, Nachsaugetank und Verfahrantrieb als integriertes Bauteil verwirklicht.

Durch die Geometrie und Anordnung der wenigen Einzelteile wird die erfindungsgemäße Aufgabe der automatischen Einstellung einer parallelen Krafteinleitung verwirklicht, und zwar durch die Verwendung von zylindrischen Elementen zur Krafterzeugung (einmal Zugkraft, einmal Druckkraft), wobei sich Kräfte und Momente unter Schließkraft aufheben.

Das oben angesprochene geschlossene System ist erfindungsgemäß vorzugsweise innerhalb der verfahrbaren Aufspannplatte angeordnet, wobei gemäß Anspruch 8 die beiden Werkzeugaufspannplatten vertikal übereinander angeordnet sind und die verfahrbare Aufspannplatte mit dem geschlossenen System das Oberjoch der Maschine darstellt.

Genauso denkbar ist jedoch auch die Verwirklichung der Erfindung bei einer Horizontalmaschine, wobei die Werkzeugaufspannplatten parallel zueinander horizontal angeordnet sind.

Zur Überwachung der Parallelität der Werkzeughälfte zueinander ist gemäß Anspruch 6 vorgesehen, dass zwischen den Aufspannplatten (insbesondere innerhalb des durch die Holme abgegrenzten Raumes) eine Sensoreinrichtung vorgesehen ist, um eventuelle schädliche Verformungen derselben zu detektieren.

Gemäß Anspruch 7 besteht diese Sensoreinrichtung vorzugsweise aus einer an einer Werkzeugaufspannplatte angeordneten Laserlichtquelle, deren Laserlicht entweder auf einen Empfänger trifft, der an der gegenüberliegenden Werkzeugaufspannplatte angeordnet ist oder aber auf einen dort angeordneten Reflektor, der den Laserlichtstrahl auf die Laserlichtquelle zurückwirft, in der ein Empfänger angeordnet ist.

Die Erfindung wird im folgenden anhand von Zeichnungen dargestellt und erläutert.

Es zeigen:
- Fig.1: Schema einer Vertikalspritzgießmaschine in geöffnetem Zustand
- Fig. 2: Maschine gemäß Figur 1 in geschlossenem Zustand

In den Figuren ist eine vertikale Spritzgießmaschine schematisch dargestellt und allgemein mit dem Bezugszeichen 1 versehen.

Ihre wesentlichen Bestandteile sind das Maschinenbett 2, eine untere, auf diesem Maschinenbett angeordnete feststehende Werkzeugaufspannplatte 3, in der Holme 4 vertikal fixiert sind. Auf diesen Holmen 4 verfahrbar angeordnet ist der feststehenden Werkzeugaufspannplatte 3 gegenüber eine Werkzeugaufspannplatte 5 angeordnet.

In der verfahrbaren Formaufspannplatte 5 sind Durchtrittsöffnungen 6 für die freien Enden der Holme 4 vorgesehen.

Oberhalb der Durchtrittsöffnungen 6 sind in der Werkzeugaufspannplatte in etwa zylinderförmige Aufnahmeräume 7 bzw. 8 vorgesehen, die über einen Kanal 9 miteinander in Verbindung stehen.

Im vorliegenden Beispiel ist zwischen den Aufnahmeräumen 7 und 8 oberhalb des Verbindungskanals 9 ein Druckmittelreservoir 10 angeordnet, welches über ein Ventil 11 mit dem Verbindungskanal 9 in Verbindung steht.

Die Aufnahmeräume 7 und 8, der Verbindungskanal 9 und das Druckmittelreservoir 10 bilden ein in sich geschlossenes System, welches mit Druckmittel gefüllt ist. Darüber hinaus ist im vorliegenden Beispiel im Aufnahmeraum 7 eine Zuleitung 12 vorgesehen, über die das System 7,8, 9 von aussen mit Druck beaufschlagbar ist.

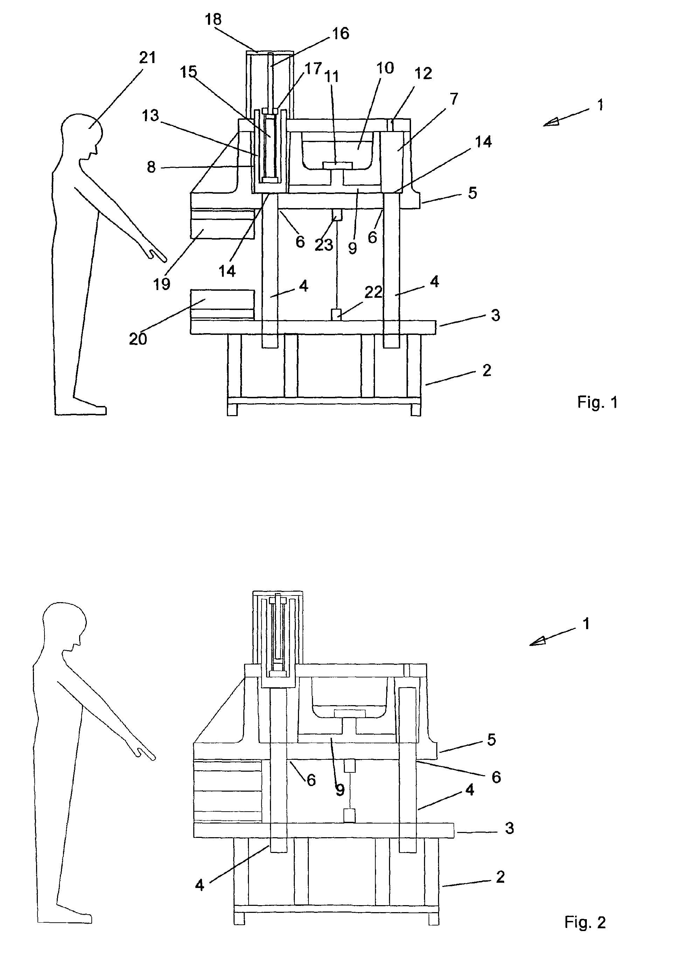

Auf den Holmen 4, die in die Aufnahmeräume bzw. den Aufnahmeraum 8 hinreichen, ist ein kolbenartig ausgebildeter Aufsatz 13 vorgesehen, der im Durchmesser größer ist als der ihn tragende Holm 4. Die oberen Enden 14 der Holme 4 schließen in geöffnetem Zustand (Figur 1) der Maschine mit den Unterseiten der Aufnahmeräume 7, 8 in etwa ab. Der Aufnahmeraum 7 ist nach oben hin (bis auf die Druckmittelzufuhr 12) abgeschlossen.

Der Aufnahmeraum 8 wird durch den kolbenartigen Aufsatz 13 nach oben abgeschlossen, da dieser Aufsatz 13 abgedichtet aus dem Aufnahmeraum 8 nach oben vorsteht.

Innerhalb des kolbenartigen Aufsatzes 13 ist ein Druckmittelzylinder 15 angeordnet, dessen Kolbenstange 16 an einem die Aufsatzöffnung 17 portalartig überspannenden Joch 18 befestigt ist.

Wird die Kolbenstange 16 in den Zylinder 15 eingefahren, bewegt sich die Werkzeugaufspannplatte 5 nach unten auf die feststehende Werkzeugaufspannplatte 3 zu, wobei die Werkzeughälften 19, 20 aufeinandergeführt werden. Die Werkzeughälften 19 und 20 sind an den Werkzeugaufspannplatten 3 und 5 ausserhalb des durch die Holme 4 abgegrenzten Raumes derart angeordnet, dass die Bedienperson 21 bequem und ungefährdet an das Formwerkzeug 19, 20 gelangen kann.

Fährt die Werkzeugaufspannplatte 5 nach unten auf die feststehende Werkzeugaufspannplatte 3 zu, fahren die Holme 4 mit ihren Enden 14 in die ihnen zugeordneten Aufnahmeräume 7 bzw. 8. Dabei verdrängt der Holm 4 im Aufnahmeraum 7 Druckmittel, welches praktisch drucklos durch den Kanal 9 in den Aufnahmeraum 8 strömt, in dem der kolbenartige Aufsatz 13 den entsprechenden Raum freigibt. Zusätzlich strömt auch Öl aus dem Reservoir 10 nach. Diese Situation ist in Figur 2 dargestellt.

Sind die beiden Werkzeughälften 19 und 20 aufeinander zugefahren, wird das System 7, 8, 9 über 12 von aussen mit Druck beaufschlagt, wobei auf den Holm 4 im Aufnahmeraum 7 eine Druckkraft ausgeübt wird und durch die Druckeinwirkung auf den kolbenartigen Aufsatz 13 eine Zugkraft auf den Holm 4 im Aufnahmeraum 8. Als beispielhafte Zahlen werden als wirkende Zugkraft hier 670 kN genannt, während die Druckkraft auf der anderen Seite ca. 196 kN beträgt.

Durch die Geometrie der Aufnahmeräume 7, 8 und der Ausgestaltung der Holme 4 und kolbenartigen Aufsätze 13 sowie durch die Abstände zum Werkzeugmittelpunkt ergibt sich eine Aufhebung der Kräfte bzw. Momente, wodurch das Werkzeug parallel zugehalten wird.

Zur Überwachung der Parallelität der Werkzeugaufspannplatten 3 und 5 bzw. der Werkzeugparallelität ist zwischen den Werkzeugaufspannplatten 3 und 5 eine Sensorik vorgesehen, die im vorliegenden Beispiel aus einer Laserlichtquelle (in diesem Fall auf der unteren Wesk{eugaufspannplatte 3) und einem auf der entgegengesetzten Werkzeugaufspannplatte 5 angeordneten Empfänger bzw. Reflektor 23 besteht.

Sollte die Parallelität der Platten 3, 5 bzw. des Werkzeugs 19, 20 gestört sein, würde der Empfänger 23 durch die Plattenverformung bedingt nicht die volle Lichtintensität detektieren, so dass ein Signal erzeugt würde, das die Maschine abschaltet.

## Patentansprüche

1. Spritzgießmaschine mit einer feststehenden Werkzeugaufspannplatte und einer relativ zu dieser verfahrbaren Werkzeugaufspannplatte, wobei die verfahrbare Aufspannplatte an Holmen (Plungern) geführt mittels eines Verfahrantriebs bewegbar ist und die auf die Aufspannplatten aufgespannten Werkzeughälften ausserhalb des durch die Holme/Plunger eingefassen Raumes angeordnet
sind,
**dadurch gekennzeichnet,**
**dass** eine der Werkzeugaufspannplatten (3, 5) miteinander in Verbindung stehende und ein in sich geschlossenes, mit einem Druckmittel gefülltes und mit Druck beaufschlagbares System bildende Aufnahmeräume (7, 8) für die einfahrenden Holmenden (14) aufweist, wobei der/die werkzeugseitige(n) Holm(e) (4) auf seiner/ihrer in den jeweiligen Aufnahmeraum weisenden Stirnseite (14) jeweils einen im Durchmesser größeren, kolbenartigen Aufsatz (13) trägt/tragen, der den Aufnahmeraum vollständig durchsetzt und abgedichtet aus diesem hinausragt.

2. Spritzgießmaschine nach Anspruch 1,
**dadurch gekennzeichnet,**
**dass** der werkzeugseitige Aufnahmeraum (8) ein größeres Volumen aufweist als der werkzeugabseitige (7).

3. Spritzgießmaschine nach Anspruch 1 oder 2,
**dadurch gekennzeichnet,**
**dass** das geschlossene System (7, 8, 9)über ein Ventil (11) mit einem Druckmittelreservoir (10) verbunden ist.

4. Spritzgießmaschine nach einem der Ansprüche 1 bis 3,
**dadurch gekennzeichnet,**
**dass** zumindest in einem der kolbenartigen Aufsätze (13) als Verfahrantrieb ein Druckmittelzylinder (15) angeordnet ist, dessen Kolbenstange (16) aus dem Aufsatz (13) hinausragt und an einem an der Aufspannplatte (5) befestigten, das Aufsatzende (17) portalartig überbrückenden Joch (18) angreift.

5. Spritzgießmaschine nach einem der Ansprüche 1 bis 4,
**dadurch gekennzeichnet,**
**dass** das geschlossene System (7, 8, 9) innerhalb der verfahrbaren Aufspannplatte (5) angeordnet ist.

6. Spritzgießmaschine nach einem der Ansprüche 1 bis 5,
**dadurch gekennzeichnet,**
**dass** zwischen den Aufspannplatten (3, 5) eine Sensoreinrichtung (22, 23) zur Überwachung der Parallelität beider Platten (3, 5) vorgesehen ist.

7. Spritzgießmaschine nach Anspruch 6,
**dadurch gekennzeichnet,**
**dass** die Sensoreinrichtung aus einer Laserlichtquelle (22) und einem Empfänger (23) bzw. Empfänger und Reflektor besteht.

8. Spritzgießmaschine nach einem der Ansprüche 1 bis 7,
**dadurch gekennzeichnet,**
**dass** die Aufspannplatten (3, 5) vertikal übereinander angeordnet sind.

9. Spritzgießmaschine nach einem der Ansprüche 1 bis 7,
**dadurch gekennzeichnet,**
**dass** die Aufspannplatten (3, 5) horizontal nebeneinander angeordnet sind.
